# EUROPEAN PATENT SPECIFICATION

(11) **EP 1 138 148 B1**
(45) Date of publication and mention of the grant of the patent: **11.06.2003**
(21) Application number: 99944459.9
(22) Date of filing: 20.08.1999
(51) Int. Cl.: H04N 5/00

(54) **DIGITAL DECODER FOR AUDIOVISUAL DATA AND APPLICATIONS FROM A PLURALITY OF PROVIDERS**
DIGITALDECODER FÜR AUDIO-VISUELLE DATEN UND ANWENDUNGEN VON EINER VIELZAHL VON ANBIETERN
DECODEUR NUMERIQUE DE DONNEES AUDIOVISUELLES ET D'APPLICATIONS PROVENANT DE PLUSIEURS FOURNISSEURS

(30) Priority: 15.10.1998 EP 98402560
(43) Date of publication of application: 04.10.2001
(73) Proprietor: THOMSON multimedia, 92100 Boulogne Billancourt (FR)
(72) Inventor: SCHAEFER, Ralf, F-92100 Boulogne Billancourt (FR); LETELLIER, Philippe, F-92100 Boulogne Billancourt (FR)
(74) Representative: Kerber, Thierry
(86) International application number: EP9906123
(87) International publication number: WO00024191

(56) References cited:
- EP-A- 0 817 105
- EP-A- 0 854 645
- WO-A-98/47279
- HARTWIG S: "SOFTWAREARCHITEKTUREN FUER INTERAKTIVE DIGITALE DECODER" FERNSEH UND KINOTECHNIK, vol. 50, no. 3, 1 March 1996 (1996-03-01), pages 92-94, 96 - 98, 100 - 102, XP000581418
- EVAIN J -P: "THE MULTIMEDIA HOME PLATFORM" EBU REVIEW- TECHNICAL, no. 275, 21 March 1998 (1998-03-21), pages 4-10, XP000767493
- MORNINGTON-WEST A: "MHEG-5 AND JAVA - THE BASIS FOR A COMMON EUROPEAN API?" EBU REVIEW- TECHNICAL, no. 275, 21 March 1998 (1998-03-21), pages 11-15, XP000767494
- DIGITAL AUDIO-VIDEO COUNCIL: "DAVIC 1.4 Specification Part 9 - Annex M: Application Level Software Architecture" 1 September 1998 (1998-09-01) , DAVIC , GENEVA, CH XP002099725 * Section M.5.3.1 Example 1: Electronic Program Guide *

## Description

The invention relates to the field of digital decoders which receive audiovisual data and applications through at least one delivery channel. The digital decoders may handle the audiovisual data and / or run an application, and output a result of handling and / or running in form of audiovisual data to a displaying device.

Today digital television is mainly operated in vertical markets, i.e. a broadcaster distributes several audio/visual/data services over a delivery system. Mostly broadcasters rely on established standards like MPEG-2 and DVB for transmitting audio, video and data, e.g. program specific information, service information, applications etc ... A part of the data is often transmitted via private descriptors or even via private data tables. Such vertical markets require digital decoders that are developed conform to the specification of broadcasters so as to be able to exploit the specific data. Often broadcasters provide an Electronic Program Guide (EPG) so as to allow the user to find a desired service. The EPG may for example be launched by a special key a remote control device which is used to control the digital decoder.

Currently there are efforts in standardization groups so as to specify a generic digital decoder platform. Such decoders for horizontal markets should be able to display audio/ video and run applications from several different broadcasters. As described above broadcasters widely use private data, which makes it nearly impossible to implement a generic EPG. Consequently, the broadcasters EPG will be the only application which can fully exploit all data transmitted by the broadcaster and will be the gate to the broadcasters commercial offer.

Digital decoders for horizontal markets must be able to switch conveniently between the different broadcasters which are accessible by the decoder. Applications (e.g. EPGs) cannot be launched by a simple keypress, but need a more generic mechanism. Further it is not known at the manufacturing date which and how many broadcasters will be supported by the digital decoder.

The invention concerns a digital decoder system designed to receive audiovisual data and interactive applications through a delivery system from a plurality of application broadcasters and to access a specific interactive application comprising:
- means for reading a plurality of characteristic data from at least one specific interactive application stored in a registration database, each specific interactive application being provided from a determined application broadcaster; wherein said characteristic data of said specific interactive application including at least an identifier data identifying said broadcaster from which said application is provided;
- said decoder system comprising moreover an application launcher which is connected to the registration database and which allows to select and launch one of the specific interactive applications corresponding to the characteristic data stored in the registration database.

The invention also concerns a method for selecting a specific interactive application in a digital decoder receiving audiovisual data and interactive applications through a delivery system from a plurality of application broadcasters comprising:
- querying a registration database so as to get a plurality of characteristic data from at least one specific interactive applications, each specific interactive application being provided from a determined application broadcaster, wherein said characteristic data of said specific interactive application including at least an identifier data identifying said broadcaster from which said application is provided;
- presenting available applications to the user on a display device;
- selecting one of the specific interactive applications corresponding to the characteristic data stored in the registration database;
- launching the selected specific interactive application.

The following is a description of examples which are given to better understand the invention. The examples are described making reference to Figures 1 to 3, in which
- Fig. 1 contains a schematic diagram of a digital decoder in a horizontal configuration,
- Fig. 2 contains a schematic representation of a registration data base,
- Fig. 3 contains a schematic partial representation of a digital decoder system.

During an installation of a digital decoder a registration data base is filled with data characterizing applications which are accessible by the decoder. Such applications may for example be EPGs and characterizing data may be the following:
- Application vendor name (e.g. a broadcaster's name)
- A logo representing the application (could be a logo for a program bundle of a broadcaster)
- A type of the application (e.g. an EPG-type)
- Address of the application. This could be a reference in the digital decoder file system or a link to a data stream. This data stream could come over broadcast, a modem or any other data source

The above listed data base keys are examples and are not entitled to be complete.

The registration data base should be exploited by an application launcher. The application launcher queries the registration data base and presents available applications in graphical menus. A user interface allows the user to navigate through the graphical menus, to select a desired application and thus to instruct the application to launch the running of the desired application.

An first advantage of the application launcher is that it allows to get information about which applications are available on all networks.

A second advantage of the application launcher is that it allows fast switching between at least two applications.

A third advantage of the application launcher is that it avoids launching conflicts between several concurrent applications, e.g. EPGs, which can occur in horizontal provider configuration.

Thus fast, safe and convenient selection of interactive applications (e.g. EPGs) may be achieved.

A fourth advantage of the application launcher is that it provides a generic, extensible and dynamic mechanism to install and launch applications in a digital decoder.

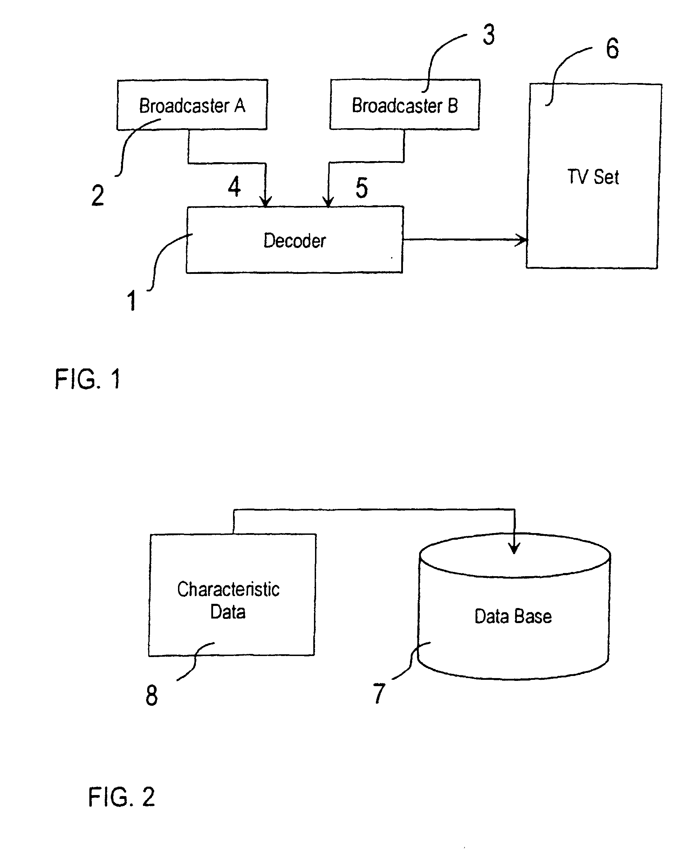

As may be seen in Fig. 1 a generic digital decoder 1 offers access to contents of a plurality of broadcasters, e.g. broadcasters A and B in boxes 2, 3 available over the delivery systems 4 and 5 connected to the generic digital decoder. The connected delivery systems 4 and 5 may for example be a cable network, a satellite receiving system or an aerial antenna. Caused by a wide usage of private data in current broadcast networks, an EPG of a broadcaster may be a candidate for the gate so as to enter a broadcasters world, i.e. an EPG-A from broadcaster A allows to select broadcaster's A applications, to watch and/or listen to broadcaster's A audiovisual programs using for example a TV set 6.

In horizontal markets there will be probably more than one EPG available. and therefore the concept of the keypress on the remote control so as to launch an EPG as known from prior art is too restricted. Rather a flexible, dynamic and extensible mechanism is required.

The generic digital decoder contains a registration data base 7 shown in Fig. 2, which stores characteristic data 8 for applications. The characteristic data 8 may for example be application name, icon, type or address.

The data is filled and stored in the registration data base 7 during an installation which in a simple implementation may be done via a set up procedure using a user activated menu, or in an automated decoder installation process. This will not be described in greater detail here.

The registration data base 7 is filled with application characteristic data 8 from one or a plurality of broadcasters.

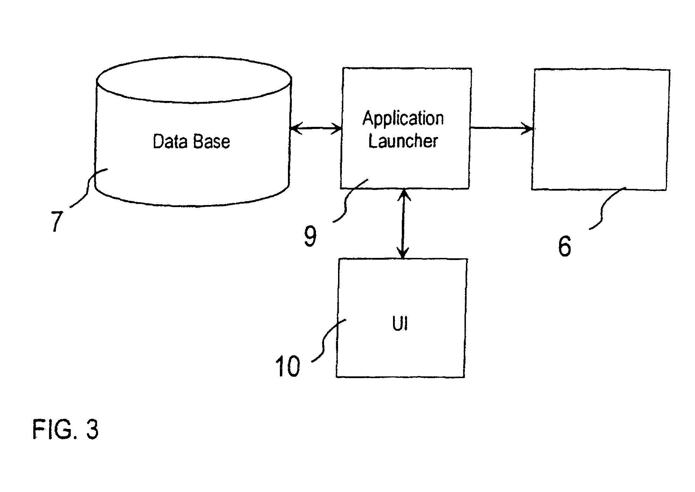

In Fig. 3 an application launcher 9 can query the registration data base 7 so as to get information about available applications in form of the stored characteristic data. The application launcher 9 presents all available applications to the user by means of a display device, for example the TV set 6. A user interface 10 may be connected to the application launcher 9 and allows the user to select and start the desired application. The user interface 10 may for example enable the user to point on the presented application on the TV set 6 with a cursor or an arrow generated on the TV set 6. The desired application may typically be a broadcaster's EPG.

After starting the broadcaster's EPG the user is in the broadcasters world and can select whatever audiovisual service or interactive application he likes using the user interface.

## Claims

1. A digital decoder system designed to receive audiovisual data and interactive applications through a delivery system (4, 5) from a plurality of application broadcasters (2,3) and to access a specific interactive application comprising :
• means for reading a plurality of characteristic data from at least one specific interactive application stored in a registration database (7), each specific interactive application being provided from a determined application broadcaster (2, 3); wherein said characteristic data of said specific interactive application including at least an identifier data identifying said broadcaster from which said application is provided ;
• said decoder system comprising moreover an application launcher (9) which is connected to the registration database and which allows to select and launch one of the specific interactive applications corresponding to the characteristic data stored in the registration database.

2. A digital decoder system according to claim 1, **characterized in that** it comprises
• display means (6) connected to the application launcher to present the specific interactive applications related to the characteristic data stored in the registration database,
• a user interface (10) connected to the application launcher which allows to select and cause the application launcher to launch one of the presented specific interactive applications.

3. A digital decoder system according to claim 2, **characterized in that** the registration database (7) contains characteristic data (8) of specific data characteristic corresponding to Electronic Program Guides received from each application broadcasters, each Electronic Program Guide allowing the user to find the desired service broadcast by the corresponding broadcaster.

4. A method for selecting a specific interactive application in a digital decoder receiving audiovisual data and interactive applications through a delivery system (4, 5) from a plurality of application broadcasters (2,3) comprising :
• querying a registration database (7) so as to get a plurality of characteristic data from at least one specific interactive application, each specific interactive application being provided from a determined application broadcaster, wherein said characteristic data of said specific interactive application including at least an identifier data identifying said broadcaster from which said application is provided;
• presenting available applications to the user on a display device;
• selecting one of the specific interactive applications corresponding to the characteristic data stored in the registration database;
• launching the selected specific interactive application.

5. A method for selecting a specific interactive application according to claim 4, **characterized in that** all the available applications are presented to the user.

6. A method for selecting a specific interactive application according to claim 4, **characterized in that** the characteristic data queried in the database are icons.

7. A method for selecting a specific interactive application according to claim 4, **characterized in that** the characteristic data queried in the data base are an address that allows to receive the interactive application.

## Patentansprüche

1. Digitales Decodersystem zum Empfang von audiovisuellen Daten und interaktiven Anwendungen über ein Übertragungssystem (4, 5) von mehreren Anwendungssendern (2, 3) und für den Zugriff zu einer spezifischen interaktiven Anwendung mit:
• Mitteln zum Lesen mehrerer Kenndaten von wenigstens einer in einer Registrierdatenbank (7) gespeicherten, spezifischen, interaktiven Anwendung, wobei jede spezifische interaktive Anwendung von einem bestimmten Anwendungssender (2, 3) geliefert wird und wobei die Kenndaten der spezifischen interaktiven Anwendung wenigstens ein Identifizierer-Datenwort enthalten, das den Sender identifiziert, von dem die Anwendung geliefert wird,
• wobei das Decodersystem außerdem einen Anwendungs-Launcher (9) enthält, der mit der Registrierdatenbank verbunden ist und der es ermöglicht, eine der spezifischen interaktiven Anwendungen entsprechend den in der Registrierdatenbank gespeicherten Kenndaten zu wählen und auszulösen.

2. Digitales Decodersystem nach Anspruch 1, **gekennzeichnet durch:**
• mit dem Anwendungs-Launcher verbundene Wiedergabemittel (6) zur Darstellung der spezifischen, interaktiven Anwendungen für die in der Registrierdatenbank gespeicherten Kenndaten,
• eine mit den Anwendungs-Launcher verbundene Benutzerschnittstelle (10), die es ermöglicht, den Anwendungs-Launcher zu wählen und zu bewirken, dass er eine der dargestellten spezifischen interaktiven Anwendungen auslöst.

3. Digitales Decodersystem nach Anspruch 2, **dadurch gekennzeichnet, dass** die Registrierdatenbank (7) Kenndaten (8) einer spezifischen Datencharakteristik entsprechend dem von jedem Anwendungssender empfangenen elektronischen Programmführern enthält und jeder elektronische Programmführer ermöglicht, dass der Benutzer den gewünschten, durch den entsprechenden Sender gesendeten Service findet.

4. Verfahren zur Auswahl einer spezifischen interaktiven Anwendung in einem digitalen Decoder, der audiovisuelle Daten und interaktive Anwendungen über ein Übertragungssystem (4, 5) von mehreren Anwendungssendern (2, 3) empfängt, mit:
• Abfrage einer Registrierdatenbank (7) zur Gewinnung mehrerer Kenndaten von wenigstens einer spezifischen interaktiven Anwendung, wobei jede spezifische interaktive Anwendung von einem bestimmten Anwendungssender geliefert wird und die Kenndaten der spezifischen interaktiven Anwendung wenigstens ein Identifizierer-Datenwort enthalten, das den Sender identifiziert, von dem diese Anwendung geliefert wird,
• Darstellung verfügbarer Anwendungen zu dem Benutzer auf einer Wiedergabeeinheit,
• Wahl einer der spezifischen interaktiven Anwendungen entsprechend den in der Registrierdatenbank gespeicherten Kenndaten,
• Auslösung der gewählten, spezifischen, interaktiven Anwendung.

5. Verfahren zur Auswahl einer spezifischen, interaktiven Anwendung nach Anspruch 4, **dadurch gekennzeichnet, dass** alle verfügbaren Anwendungen den Benutzer gezeigt werden.

6. Verfahren zur Auswahl einer spezifischen, interaktiven Anwendung nach Anspruch 4, **dadurch gekennzeichnet, dass** die in der Datenbank abgefragten Kenndaten Icons sind.

7. Verfahren zur Auswahl einer spezifischen, interaktiven Anwendung nach Anspruch 4, **dadurch gekennzeichnet, dass** die in der Datenbank abgefragten Kenndaten eine Adresse sind, die den Empfang der interaktiven Anwendung ermöglicht.

## Revendications

1. Système de décodeur numérique conçu pour recevoir via un système de diffusion (4, 5) de données audiovisuelles et d'applications interactives provenant de plusieurs diffuseurs (2, 3), et pour accéder à une application interactive spécifique ; comportant
• un dispositif permettant de lire une pluralité de données caractéristiques provenant d'au moins une application interactive spécifique stockée dans une base de données d'enregistrement (7), chaque application interactive spécifique étant fournie par un diffuseur d'applications déterminé (2,3), dans lequel lesdites données caractéristiques de ladite application interactive spécifique incluent au moins une donnée d'identification identifiant ledit diffuseur fournissant ladite application ;
• ledit système de décodeur comportant en outre un lanceur d'applications (9) connecté à la base de données d'enregistrement qui permet de sélectionner et de lancer l'une des applications interactives spécifiques correspondant aux données caractéristiques stockées dans la base de données d'enregistrement.

2. Système de décodeur numérique selon la revendication 1, **caractérisé en ce qu'**il comporte
• un dispositif d'affichage (6) connecté au lanceur d'applications pour présenter les applications interactives spécifiques relatives aux données caractéristiques stockées dans la base de données d'enregistrement,
• une interface utilisateur (10) connectée au lanceur d'applications qui permet de sélectionner l'une des applications interactives spécifiques présentées et de la lancer via le lanceur d'applications.

3. Système de décodeur numérique selon la revendication 2, **caractérisé en ce que** la base de données d'enregistrement (7) contient des données caractéristiques (8) spécifiques correspondant à des guides électroniques des programmes reçus de chaque diffuseur, chaque guide électronique des programmes permettant à l'utilisateur de localiser le service souhaité diffusé par le diffuseur correspondant.

4. Méthode de sélection d'une application interactive spécifique dans un décodeur numérique recevant via un système de diffusion (4, 5) des données audiovisuelles et des applications interactives provenant de plusieurs diffuseurs d'applications (2, 3) comportant :
• l'interrogation d'une base de données d'enregistrement (7) afin d'obtenir une pluralité de données caractéristiques provenant d'au moins une application interactive spécifique, chaque application interactive spécifique étant fournie par un diffuseur d'applications déterminé, où lesdites données caractéristiques de ladite application interactive spécifique incluent au moins une donnée d'identification identifiant ledit diffuseur fournissant ladite application ;
• la présentation des applications disponibles à l'utilisateur sur un dispositif d'affichage ;
• la sélection de l'une des applications interactives spécifiques correspondant aux données caractéristiques stockées dans la base de données d'enregistrement ;
• le lancement de l'application interactive spécifique sélectionnée.

5. Méthode de sélection d'une application interactive spécifique selon la revendication 4, **caractérisée en ce que** toutes les applications disponibles sont présentées à l'utilisateur.

6. Méthode de sélection d'une application interactive spécifique selon la revendication 4, **caractérisée en ce que** les données caractéristiques consultées dans la base de données sont des icônes.

7. Méthode de sélection d'une application interactive spécifique selon la revendication 4, **caractérisée en ce que** les données caractéristiques consultées dans la base de données sont une adresse qui permet de recevoir l'application interactive.
